# EUROPEAN PATENT SPECIFICATION

(11) **EP 0 886 197 B1**
(45) Date of publication and mention of the grant of the patent: **19.02.2003**
(21) Application number: 98304793.7
(22) Date of filing: 17.06.1998
(51) Int. Cl.: G04C 10/00

(54) **Power-generation detection circuit, semiconductor device, electronic device, timepiece, power-generation detection method, and power consumption control method**
Stromerzeugungsdetektionsschaltung, Halbleitervorrichtung, elektronische Vorrichtung, Uhrwerk, Stromerzeugungsdetektions- und Stromverbrauchskontrollverfahren
Circuit de détection de la génération de puissance, dispositif semiconducteur, dispositif électronique, pièce d'horlogerie, méthode de détection de la génération de puissance, et méthode de contrôle de la consomation d'énergie

(30) Priority: 17.06.1997 JP 16014797; 10.03.1998 JP 5869498
(43) Date of publication of application: 23.12.1998
(73) Proprietor: Seiko Epson Corporation, Shinjuku-ku, Tokyo 163-0811 (JP)
(72) Inventor: Fujisawa, Teruhiko, Suwa-shi, Nagano-ken 392 (JP)
(74) Representative: Sturt, Clifford Mark

(56) References cited:
- EP-A- 0 208 986
- EP-A- 0 285 838
- US-A- 3 721 832
- US-A- 3 911 360
- US-A- 4 173 756
- PATENT ABSTRACTS OF JAPAN vol. 007, no. 253 (P-235), 10 November 1983 & JP 58 137784 A (SUWA SEIKOSHA KK), 16 August 1983
- PATENT ABSTRACTS OF JAPAN vol. 095, no. 001, 28 February 1995 & JP 06 300865 A (SEIKO INSTR INC), 28 October 1994

## Description

The present invention relates to a power-generation detection circuit of an electronic device which can be driven by an AC power generated by motion of a rotating weight or motion of a spring, a semiconductor device in which the power-generation detection circuit is formed, an electronic device having the power-generation detection circuit, a timepiece, a power-generation detection method, and a power consumption control method.

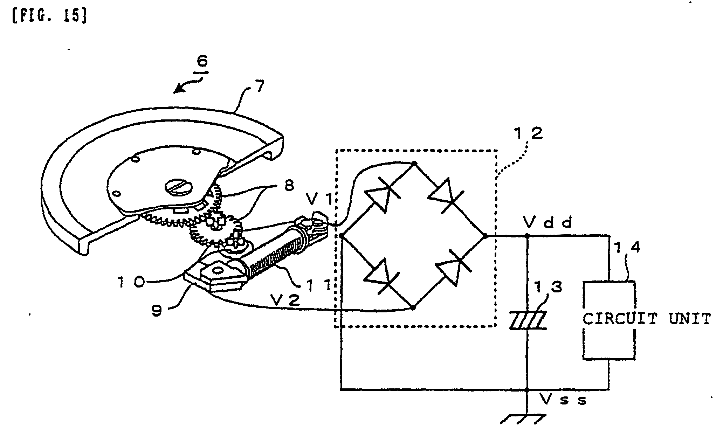

In a compact electronic device such as a wrist watch suitable for portability, an electronic device which incorporates a power-generation device therein to obtain a power for driving the electronic device without a battery has been devised and practically used. FIG. 15 shows the basic arrangement of an electronic device which incorporates an electromagnetic generator 6 as an example. This portable electronic device comprises an electromagnetic power-generation device as the power-generation device 6. This portable electronic device comprises a rotating weight 7 performing swing motion in the electronic device, a train wheel mechanism 8 for transmitting rotating motion of the rotating weight 7 to the electromagnetic generator, and a stator 9 and a rotor 10 which constitute the electromagnetic generator. When the rotor 10 rotates, electromotive force is generated by an output coil 11 of the stator 9, so that an AC power can be extracted. In addition, the AC power output from the electromagnetic generator 6 is entirely rectified by a rectification diode bridge 12 to supply the power to a large-capacity capacitor 13 and a circuit unit 14 of electronic device. When no power generation is performed by the electromagnetic generator 6, the circuit unit 14 is driven by power stored in the large-capacity capacitor 13. For this reason, this portable electronic device can continuously operate the circuit unit 14 without any battery.

This electronic device has no means for detecting the state of power generation supplied from the power generation device 6 and the current consumption of the circuit unit 14 is constant regardless of the state of power generation of the power generation device 6. For this reason, even if no power is being generated, since power is consumed in the circuit unit 14, the large-capacity capacitor 13 performs a discharging operation within a short period of time. As a result, a problem arises in that the circuit unit 14 can come to a complete stop.

WO 97/09657A describes an electronic timepiece movement including a capacitor for storing a charge from an AC generator via a passive component in the form of a diode. A switching means in the form of an active component, such as a MOS transistor, is also provided between the AC generator and the capacitor and is operated to replace or supplement the diode passive component, improving circuit efficiency. The capacitor is used to power the timepiece movement and, additionally, a control circuit which is used to selectively couple resistors of a power dissipation circuit to the output of the AC generator in order to control the speed and hence the output voltage of the AC generator.

EP 0208986A describes a timepiece including a solar cell acting as a DC power source. The timepiece also includes a storage capacitor which charges from the output voltage provided by the solar cell and a control circuit, in the form of a threshold circuit, which controls the decoupling of the capacitor from the timepiece circuitry until the voltage stored in the storage capacitor exceeds a predetermined value. In this manner, the storage capacitor can be dimensioned to provide power requirements during normal running of the timepiece, thereby obviating the need to over dimension the storage capacitor to accommodate high start up loads.

It is an object of the present invention to provide a power generation detection circuit which can detect the state of power generation (presence/absence of power generation and strength of power generation) supplied from a power generation device of an electronic device by a simple method and can control power consumption of a circuit unit depending on the detected state of generation power. It is an object of the invention similarly to provide a semiconductor device, an electronic device, a timepiece, a power generation detection method, and a power consumption control method.

In order to solve the above problem, the invention of claim 1 provides a power generation detection circuit for detecting power generation from an AC power generation device comprising:
switching means for performing a switching operation depending on a cycle of an AC power signal from the AC power generation device;
a capacity element for storing charges in response to said switching operation performed by said switching means;
discharging means, inserted in a discharging path of said capacity element, for discharging the charges stored in said capacity element; and characterised by
voltage detection means, connected to the capacity element and the discharging path, for detecting that a voltage of the charges stored in said capacity element exceeds a predetermined value and for providing an output signal depending on the detected voltage for indicating power generation by the AC power generation device.

In the invention according to claim 2, a power generation detection circuit according to claim I is characterised in that said discharging means is a resistor element.

In the invention according to claim 3, a power generation detection circuit according to claim 1 is characterised in that said discharging means is constituted by a constant-current circuit.

In the invention according to claim 4, a power generation detection circuit according to claim 3 is characterised in that said constant-current circuit is constituted by a constant-current source and a current mirror circuit.

In the invention according to claim 5, a power generation detection circuit according to claim 1 is characterised by comprising a current-limiting means, connected in series with said capacity element, for limiting a charge current of said capacity element.

In the invention according to claim 6, a power generation detection circuit according to claim 1 is characterised in that said voltage detection means is an inverter circuit.

In the invention according to claim 7, a power generation detection circuit according to claim 1 is characterised in that said voltage detection means is a Schmidt trigger inverter circuit.

In the invention according to claim 8, a power generation detection circuit according to claim 1 is characterised in that said voltage detection circuit is a comparator circuit.

In the invention according to claim 9, a power generation detection circuit according to claim 1 is characterised in that said switching means is a transistor.

In the invention according to claim 10, a power generation detection circuit according to claim 9 is characterised in that said transistor is a MOS transistor.

In the invention according to claim 11, a power generation detection circuit according to claim 9 is characterised in that said transistor is a bipolar transistor.

In order to solve the above problem, a semiconductor device according to the invention of claim 12 is characterised by comprising: a power generation detection circuit according to any one of claims 1 to 11.

In order to solve the above problem, an electronic device according to the invention of claim 13 is characterised by comprising: a power generation device for generating an AC power; and a power generation detection circuit according to any one of claims 1 to 11.

In the invention according to claim 14, an electronic device according to claim 13 is characterised in that said power generation device has a rotating weight for performing swing motion and a power generation element for generating electromotive force by rotating motion performed by said rotating weight.

In the invention according to claim 15, an electronic device according to claim 13 is characterised in that said power generation device has an elastic member on which a deformation force acts, rotating means for performing rotating motion by recovery force generated by causing said elastic member to return to an original shape, and a power generation element for generating electromotive force by the rotating motion of said rotating means.

In the invention according to claim 16, an electronic device according to claim 13 is characterised in that said power generation device has a piezoelectric element which generates electromotive force by a piezoelectric effect when displacement acts on said piezoelectric element.

In order to solve the above problem, in the invention according to claim 17 an electronic device according to the invention of any one of claims 13 to 16 is characterised by comprising: a control circuit for controlling power consumption of said device on the basis of a detection result of said voltage detection means.

In the invention according to claim 18, an electronic device according to claim 17 is characterised in that said control circuit determines that said power generation device does not perform power generation when a voltage of said capacity element is not more than the predetermined value, and reduces power consumption of said device.

In the invention according to claim 19, an electronic device according to claims 17 or 18 is characterised in that said control circuit determines that said power generation device is performing power generation when a voltage of said capacity element exceeds the predetermined value, and cancels the reduction in power consumption.

In the invention according to claim 20, an electronic device according to any one of claims 17 to 19 is characterised in that said control circuit controls the power consumption of said device in consideration of the length of time in which a voltage of said capacity element exceeds the predetermined value.

In order to solve the above problem, a timepiece according to the invention of claim 21, is characterised by comprising: an electronic device according to any one of claims 13 to 20 and a timer circuit for counting time.

In the invention according to claim 22, a timepiece according to claim 21 is characterised in that said power generation device, said power generation detection circuit, and said timer circuit are accommodated in a housing of a wrist watch.

In the invention according to claim 23, a timepiece according to claim 21 is characterised in that said power generation device, said power generation detection circuit, and said timer circuit are accommodated in a housing of a pocket watch.

In the invention according to claim 24, a timepiece according to claim 21 is characterised in that said power generation device, said power generation detection circuit, and said timer circuit are accommodated in a housing of a table clock.

In order to solve the above problem, a power generation detection method according to the invention of claim 25 comprises: the first step of performing a charging operation to a capacity element by a switching operation depending on a cycle of an AC power which is externally generated by an AC power generation device and characterised by; the second step of performing a discharging operation of said capacity element when a charging operation is not performed to said capacity element; the third step of determining whether a detected voltage of said capacity element is at least a predetermined voltage; and the fourth step of determining that power generation is performed when the detected voltage of said capacity element exceeds the predetermined voltage and providing an output signal depending on the detected voltage.

In the invention according to claim 26, a power consumption control method is characterised by comprising a power generation detection method according to claim 25; and the fifth step of reducing power consumption of a circuit unit when no power generation is performed.

In the invention according to claim 27, a power consumption control method according to claim 26 is characterised by comprising: the sixth step of determining whether time in which the voltage exceeds the predetermined voltage continues for a predetermined period of time; and the seventh step of cancelling a reduction in power consumption of said circuit unit when the time continues for the predetermined period of time.

Embodiments of a power generation detection circuit according to the present invention will be described below by way of further example only and with reference to the accompanying drawings.

FIG. 1 is a circuit block diagram showing the basic arrangement of an electronic device to which a power generation detection circuit according to the present invention is applied.

FIG. 2 is a circuit diagram showing an arrangement of a power generation circuit according to the present invention.

FIG. 3 is a timing chart for explaining an operation of a power generation detection circuit according to the present invention.

FIG. 4 is a circuit block diagram showing the basic arrangement of a power generation detection circuit according to Embodiment 2 of the present invention.

FIG. 5 is a circuit block diagram showing the basic arrangement of a power generation detection circuit according to Embodiment 3 of the present invention.

FIG. 6 is a circuit block diagram showing the basic arrangement of a power generation detection circuit according to Embodiment 4 of the present invention.

FIG. 7 is a circuit block diagram showing the basic arrangement of a power generation detection circuit according to Embodiment 5 of the present invention.

FIG. 8 is a circuit block diagram showing the basic arrangement of a power-generation detection circuit according to Embodiment 6 of the present invention.

FIG. 9 is a concept chart showing V1 which is output from an electromagnetic generator 6 and changes depending on a change in rotating speed of a rotor 10 according to Embodiment 7 of the present invention and shows a power-generation detection signal Vout for V1.

FIG. 10 is a concept chart showing V1 which is output from an electromagnetic generator 6 according to Embodiment 8 of the present invention and shows a power-generation detection signal Vout for V1.

FIG. 11 is a circuit diagram showing the basic arrangement of a power supply block according to Embodiment 9 of the present invention.

FIG. 12 is a concept chart showing the waveforms of V1 and V2 which are output from an electromagnetic generator according to Embodiment 9 of the present invention.

FIG. 13 is a circuit diagram showing the arrangement of a power-generation detection circuit according to Embodiment 9 of the present invention.

FIG. 14 is a concept chart for explaining an application of a power-generation detection circuit 1 of the present invention.

FIG. 15 is a schematic view showing the arrangement of a power supply block of an electronic device having a power-generation device.

### (Embodiment 1)

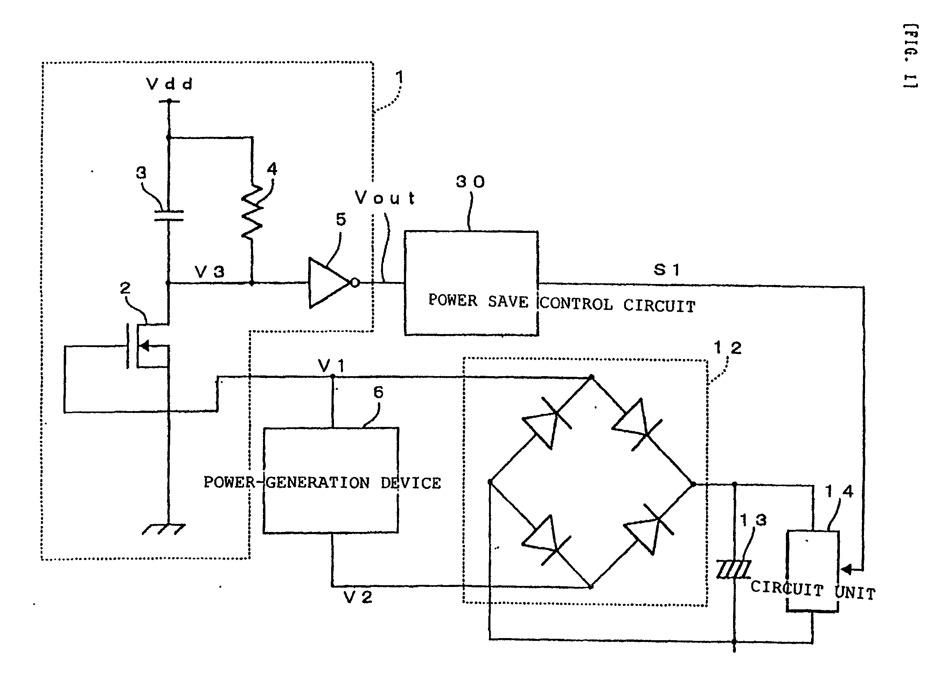

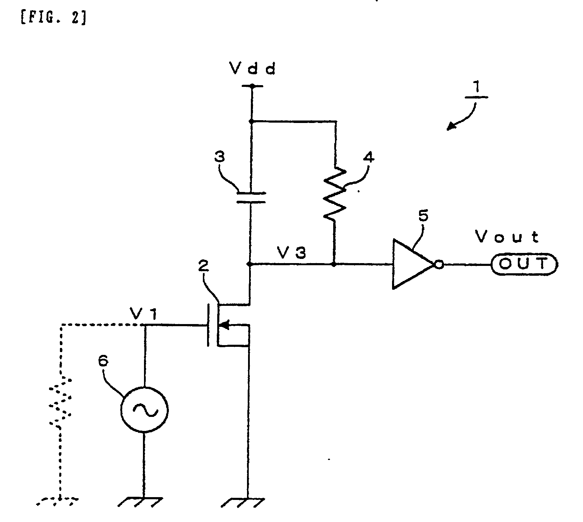

FIG. 1 is a circuit block diagram showing the basic arrangement of an electronic device to which a power-generation detection circuit according to the present invention is applied. The same reference numerals are used in FIG. 1 as denote the same parts in FIG. 15, and a detailed description thereof will be omitted. Referring to FIG. 1, the electronic device is constituted by a power-generation detection circuit 1, a power save control circuit 30, a power-generation device 6, a rectification diode bridge 12, a large-capacity capacitor 13, and a circuit unit 14. The basic arrangement of the power-generation detection circuit 1 is shown in FIG. 2. In FIG. 2, the power-generation detection circuit 1 of this embodiment is connected to the power-generation device 6, and is constituted by a MOS transistor 2, a capacitor 3, a pull-up resistor 4, and an inverter circuit 5.

A signal from a power-generation device 6 is connected to the gate of the MOS transistor 2, and the MOS transistor 2 repeats an ON/OFF operation in response to a generated AC voltage V1 to control charging of the capacitor 3. When the switching means is constituted by a MOS transistor, a power-generation detection circuit 1 including the inverter circuit 5 can be constituted by an inexpensive CMOS-IC. However, the switching element and the voltage detection means may be constituted by bipolar transistors. The pull-up resistor 4 functions to fix a voltage value V3 of the capacitor 3 to a Vdd potential in a no-power-generation state and generate a leakage current in the no-power-generation state. The pull-up resistor 4 has a high resistance of about several tens to several hundreds MW, and may also be constituted by a MOS transistor having a high ON resistance. The voltage value V3 of the capacitor 3 is determined by the inverter circuit 5 connected to the capacitor 3. If a power-generation state is set, the inverter circuit 5 outputs a power-generation detection signal Vout to be "HI".

Although a low-voltage side Vss of the circuit is shown as a reference voltage in this embodiment, as used in many wrist watch circuits, a high-voltage side Vdd may be used as a reference without any problem. In addition, an AC voltage V1 of the power-generation device 6 may be connected to Vss through a high-resistance resistor to make a potential in a no-power-generation state stable. In addition, in order to turn off an Nchannel MOS transistor in a no-power-generation state, an output voltage V1 of the power-generation device in the no-power-generation state must be made stable at Vss, and V1 is preferably connected to Vss through a resistor element.

The power save control circuit 30 sends a control signal S1 to the circuit unit 14 according to the power-generation detection signal Vout from the inverter circuit 5 of the power-generation detection circuit 1 to switch the circuit unit 14 to a power save mode. When the circuit unit 14 receives the control signal S1, the circuit unit 14 determines the power save mode is set, and cuts a power supply to a mechanical driver or some functions of the circuit to reduce power consumption. In the power save mode, when a timepiece (especially, a wrist watch) is used as an electronic device to be applied, for example, moving of needles may be stopped or a power supply to some functions of the circuit (e.g., a sensor function, a chronograph function, and a liquid-crystal display function) may be turned off.

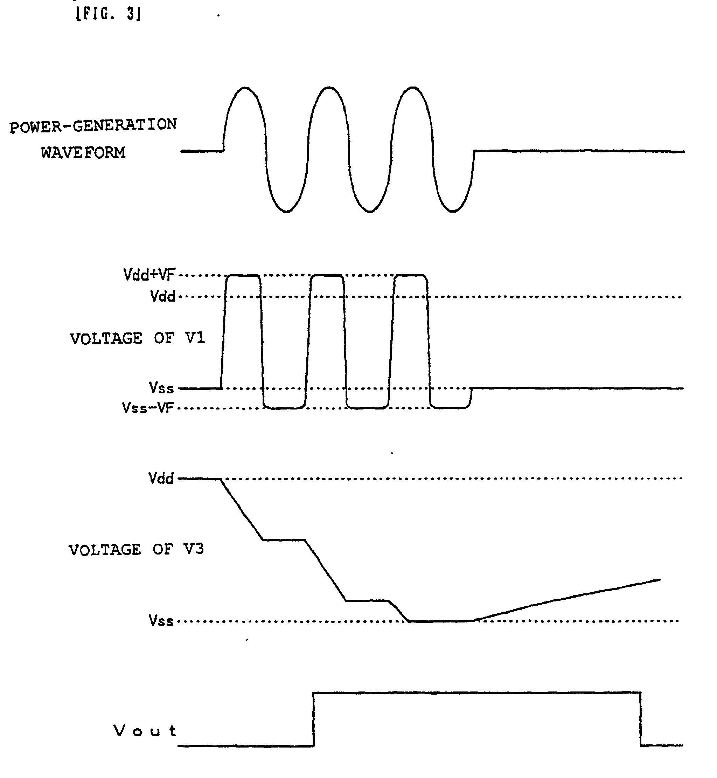

An operation of the power-generation circuit according to this embodiment will be described below with reference to the timing chart shown in FIG. 3. When generation of an AC power is started by the power-generation device 6, an AC signal which has an amplitude of 'Vdd + VF (forward voltage of a rectification diode)' to 'Vss - VF' appears at a one terminal V1 of the power-generation device 6. A signal having a phase opposing the phase of V1 and the same amplitude as that of V1 appears at the other terminal V2 of the power-generation device. When generation is started, and the voltage V1 rises from Vss to Vdd, the MOS transistor 2 is turned on to start charging of the capacitor 3. The potential of V3 is fixed to the Vdd side by the pull-up resistor 4 in a no-power-generation state. However, when the power generation occurs to start charging of the capacitor 3, the potential of V3 begins to fall to the Vdd side. When the voltage of V1 decreases to Vss, and the MOS transistor 2 is turned off, charging to the capacitor 3 is stopped. However, the potential of V3 is kept constant by the capacitor 3. The above operation is repeated while generation continues, and the potential of V3 decreases to Vss to be stable. When the potential V3 is lower than the threshold value of the inverter circuit 5, the power-generation detection signal Vout serving as an output from the inverter circuit 5 is switched from "LOW" to "HI", and generation can be detected. Response time until generation is detected can be arbitrarily set by connecting a current-limiting resistor, by changing the capability of the MOS transistor to adjust the value of a charge current for the capacitor 3, or changing the capacitance of the capacitor 3.

When the power generation is stopped, since V1 is stable at a Vss level, the MOS transistor 2 is kept in an OFF state. The voltage of V3 is continuously held for a while by the capacitor 3. However, since charges of the capacitor 3 are discharged by a small leakage current generated by the pull-up resistor 4, V3 begins to gradually increase from Vss to Vdd. When V3 exceeds the threshold value of the inverter circuit 5, the power-generation detection signal Vout serving as an output from the inverter circuit 5 is switched from "LOW" to "HI", a no-power-generation state can be detected. This response time can be arbitrarily set by changing the resistance of the pull-up resistor 4 and adjusting the leakage current of the capacitor. When the power-generation detection signal Vout serving as an output from the inverter circuit 5 is monitored as described above, the state of power generation can be detected.

Therefore, if the state of power generation can be detected, setting/cancelling of a power save mode is switched with respect to the circuit unit 14 by the power save control circuit 30 depending on the state, and operation time in no-power-generation state can be elongated by suppressing power consumption.

### (Embodiment 2)

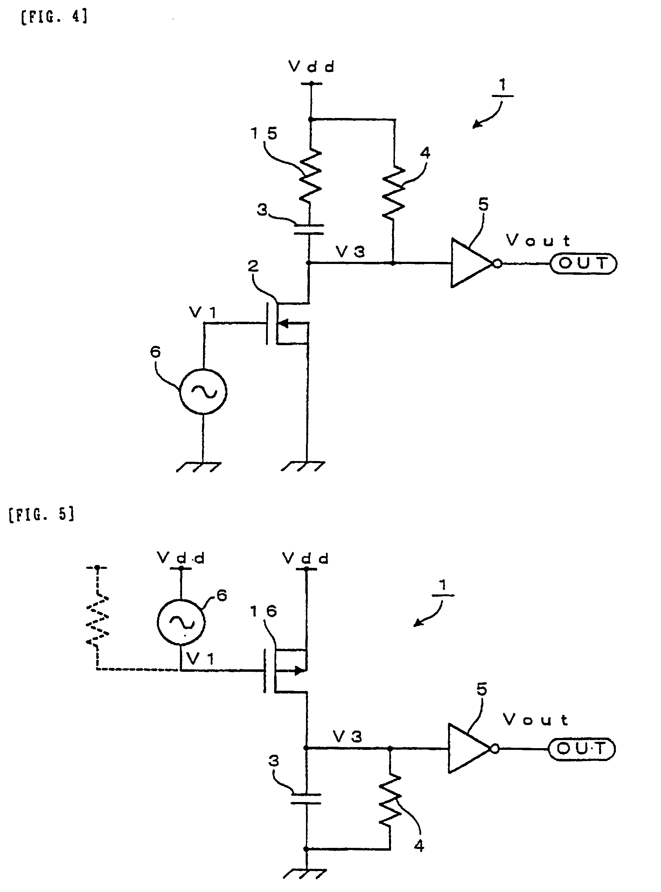

FIG. 4 shows an embodiment of the present invention and an example wherein a current-limiting resistor 15 is connected in series with a capacitor 3. Since this embodiment has almost the same arrangement as that in FIG. 2, the same reference numerals as in FIG. 2 denote the same parts in FIG. 4. A charge current of the capacitor 3 when a MOS transistor 2 is turned on and response time until a power-generation detection signal is output can be adjusted by changing the value of the current-limiting resistor 15. As in this embodiment, when the current-limiting resistor 15 is connected, a charge current to the capacitor 3 decreases. For this reason, a longer time is required to make a capacitor voltage V3 lower than the threshold voltage of the inverter, and the time until a power-generation detection signal is output becomes long.

### (Embodiment 3)

FIG. 5 shows an embodiment of the present invention and an example wherein a switching MOS transistor is constituted by a P-channel MOS transistor 16. The positions of a capacitor and a MOS transistor are reversed to those in the arrangement of an N-channel MOS transistor shown in FIG. 2 with respect to a power supply voltage. Since this embodiment has almost the same arrangement as that in FIG. 2, the same reference numerals as in FIG. 2 denote the same parts in FIG. 5. In this arrangement, in order to turn off the P-channel MOS transistor 16 in a no-power-generation state, an output voltage V1 of the power-generation device in a no-power-generation state must be stable at Vdd, and V1 is preferably connected to Vdd through a resistor. As this resistor, a MOS transistor having a high ON resistance may be used.

### (Embodiment 4)

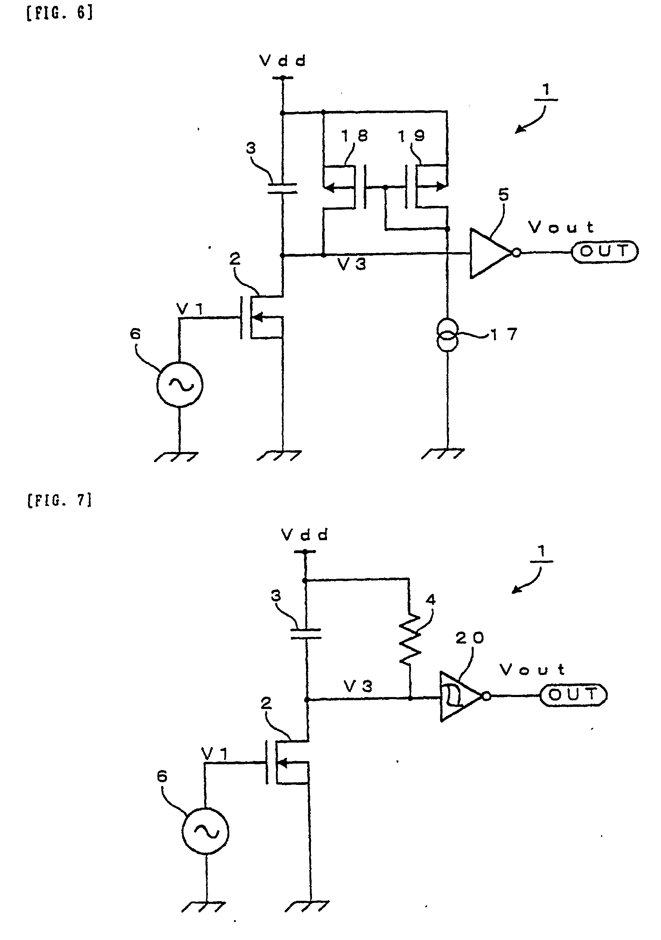

FIG. 6 shows an embodiment of the present invention and an example wherein a pull-up resistor is constituted by a constant-current circuit. Since this embodiment has almost the same arrangement as that in FIG. 2, the same reference numerals as in FIG. 2 denote the same parts in FIG. 6. A constant-current circuit is constituted by a current mirror circuit constituted by a constant-current source 17 and MOS transistors 18 and 19, and a slight constant current flows from Vdd to V3. In order to hold outputting of a power-generation detection signal Vout for a long period of time, a leakage current of the capacitor must be reduced, and the resistance of the pull-up resistor considerably increases. In this case, a variation in resistance is enlarged, and output holding time of a power-generation detection signal Vout has characteristics having a large variation. When the generating detection circuit is constituted by the constant-current circuit as in this embodiment, a small leakage current value such as several nA can be set, and a variation in leakage current can be advantageously made considerably smaller than that in the arrangement wherein the generating detection circuit is constituted by a resistor.

### (Embodiment 5)

FIG. 7 shows an embodiment of the present invention and an example wherein a voltage detection means is constituted by a Schmidt trigger inverter circuit. Since this embodiment has almost the same arrangement as that in FIG. 2, the same reference numerals as in FIG. 2 denote the same parts in FIG. 7. When the voltage detection means is constituted by a Schmidt trigger inverter circuit 20 having hysteresis characteristics, stable power-generation detection can be advantageously performed without being influenced by an instantaneous variation in voltage V3 of a capacitor.

### (Embodiment 6)

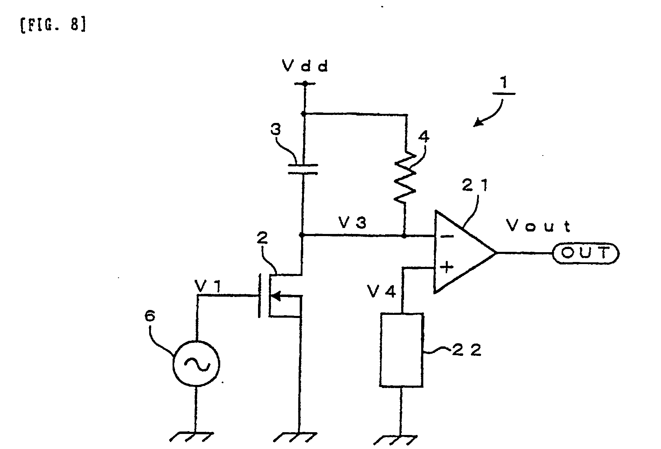

FIG. 8 shows an embodiment of the present invention and an example wherein a voltage detection means is constituted by a comparator circuit 21. Since this embodiment has almost the same arrangement as that in FIG. 2, the same reference numerals as in FIG. 2 denote the same parts in FIG. 8. The comparator circuit 21 compares an output voltage V4 from a reference voltage generation circuit 22 with a capacitor voltage V3. If V3 is lower than V4, the comparator circuit 20 outputs a power-generation detection signal to be "HI".

In the electronic device comprising the generator shown in FIG. 2, a power supply voltage changes depending on the charging state of the large-capacity capacitor 13 and varies depending on the voltages at both the ends of the large-capacity capacitor 13. When the voltage detection means is constituted by an inverter, the threshold voltage of the inverter changes to be interlocked with a variation in power supply voltage Vdd. For this reason, power-generation detection time also varies. When the voltage detection means is constituted by the comparator circuit 21 as in this embodiment, the threshold value of power-generation detection is kept constant without being influenced by a variation in power supply voltage, and stable detection at a high precision can be realised.

### (Embodiment 7)

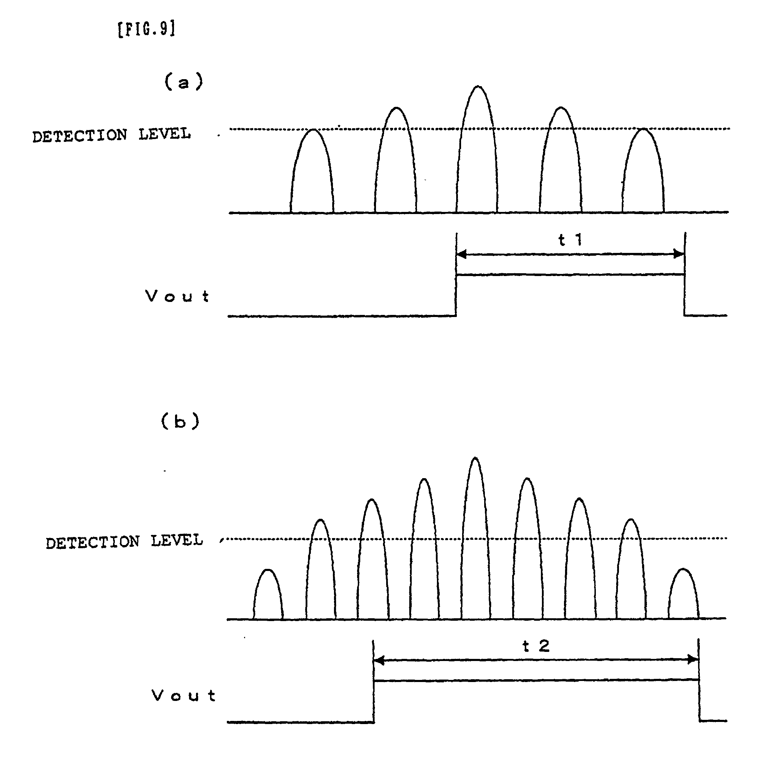

FIG. 9 is a concept chart showing V1 which is output from an electromagnetic generator 6 and changes depending on a change in rotating speed of a rotor 10 and a power-generation detection signal Vout for V1. In particular, FIG. 9(a) shows a case wherein the rotating speed of the rotor 10 is low, and FIG. 9(b) shows a case wherein the rotating speed of the rotor 10 is high. The voltage level and cycle (frequency) of V1 output from the electromagnetic generator 6 change depending on the rotating speed of the rotor 10. More specifically, as the rotating speed is higher, the voltage level of V1 is high, and the cycle is shortened. For this reason, the length of output holding time (ON time) of the power-generation detection signal Vout changes depending on the strength of power generation of the electromagnetic generator 6. More specifically, when the output V1 slightly changes as in FIG. 9(a), the output holding time is represented by t1; when the output V1 change is large as in FIG. 9(b), the output holding time is represented by t2. The output holding times t1 and t2 satisfy the relationship t1 < t2. As described above, according to the length of the output holding time of the power-generation detection signal Vout, the strength of power generation of the electromagnetic generator 6 can be known. Embodiment 7 described above can also be applied to Embodiments 1 to Embodiment 6 described above, as a matter of course.

### (Embodiment 8)

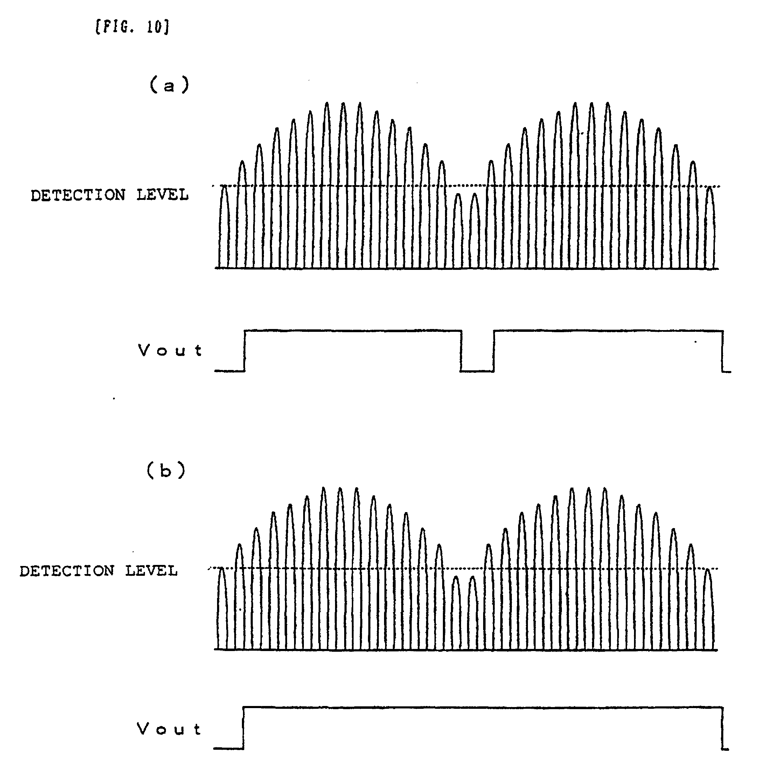

FIG. 10 is a concept chart showing V1 which is output from the electromagnetic generator 6 and changes depending on a shaking manner of a wrist watch when the electromagnetic generator 6 is applied to the wrist watch or the like, and a power-generation detection signal Vout for V1. For example, when the power-generation detection circuit 1 is applied to a wrist watch, the rotating speed of the rotor 10 changes depending on the motion of a user. More specifically, when the user strongly shakes the watch with his/her hand or strongly shakes his/her hand with the watch attached; as described above, the output holding time of the power-generation detection signal Vout becomes long. In contrast to this, when the user does not strongly shake the watch, the output holding time of the power-generation detection signal Vout becomes short. Therefore, when it is detected whether the output holding time of the power-generation detection signal Vout continues for a predetermined period of time, it can be known whether the user strongly shakes the watch (wrist watch) or not. In this case, when the OFF state of the power-generation detection signal Vout continues to set a power save mode, if the output holding time of the power-generation detection signal Vout continues for the predetermined period of time; it is determined that the user cancels the power save mode, and the power save mode may be automatically cancelled.

However, the following is known. That is, when the user strongly shakes the watch, as shown in FIG. 10(a), a rotating weight 7 is irregularly rotated, V1 serving as an output from the electromagnetic generator 6 has two amplitude peaks. In this case, when the capacity of a capacitor 3 is small, or when the resistance of a pull-up resistor 4 inserted in the discharging path of the capacitor 3 is low, and a discharge current is large, the power-generation detection signal Vout is temporarily discontinued at the trough between the two peaks. Therefore, the strength of power generation is not in proportion to the output holding time of the power-generation detection signal Vout, and the power save mode is not cancelled according to the intention of a user.

In Embodiment 8 described above, the capacity of the capacitor 3 increases to prevent the power-generation detection signal Vout from being discontinued. FIG. 10(b) is a concept chart showing V1 obtained when a user strongly shakes a wrist watch to which the electromagnetic generator 6 is applied when the capacity of the capacitor 3 is increased, and a power-generation detection signal Vout for V1. As shown in FIG. 10(b), when the capacity of the capacitor 3 is increased, charges are suppressed from being reduced at the trough between two peaks, and it can be understood that the power-generation detection signal Vout continues without any discontinuation. Therefore, the output holding time of the power-generation detection signal Vout corresponds to the strength of power generation, and the power save mode can be correctly switched.

In this manner, an improvement in the capacity of the capacitor 3 described above is effective especially when, in cancelling the power save mode, the wrist watch is strongly shaken by a user so as to ensure that the power save mode is cancelled according to his/her intention.

Although Embodiment 8 described above is applied to the arrangement of Embodiment 1, Embodiment 8 may be applied to not only the arrangement of Embodiment 1, but also the arrangement of Embodiment 2 to Embodiment 7 as a matter of course.

### (Embodiment 9)

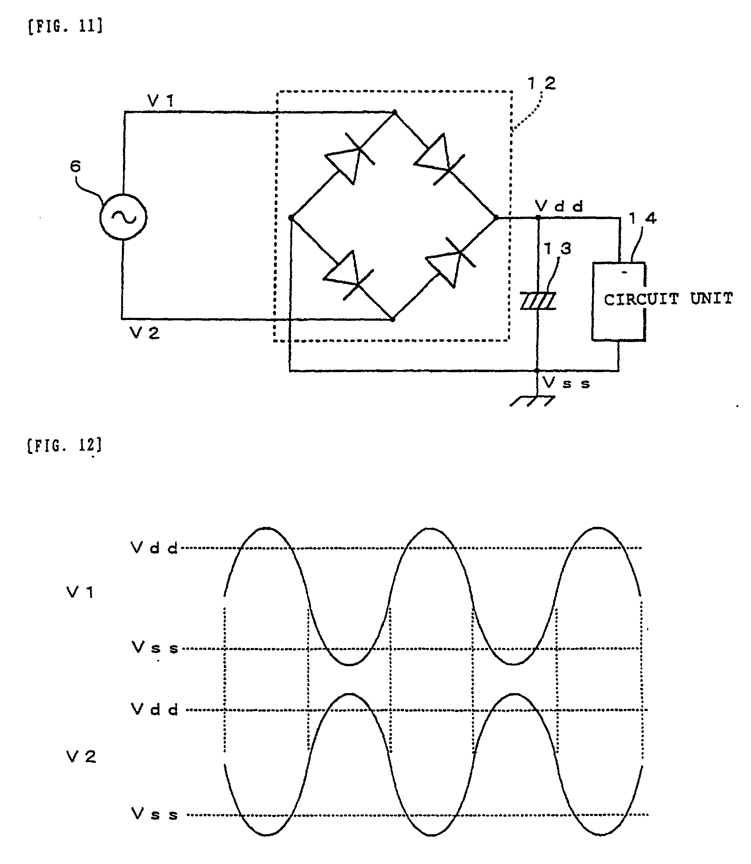

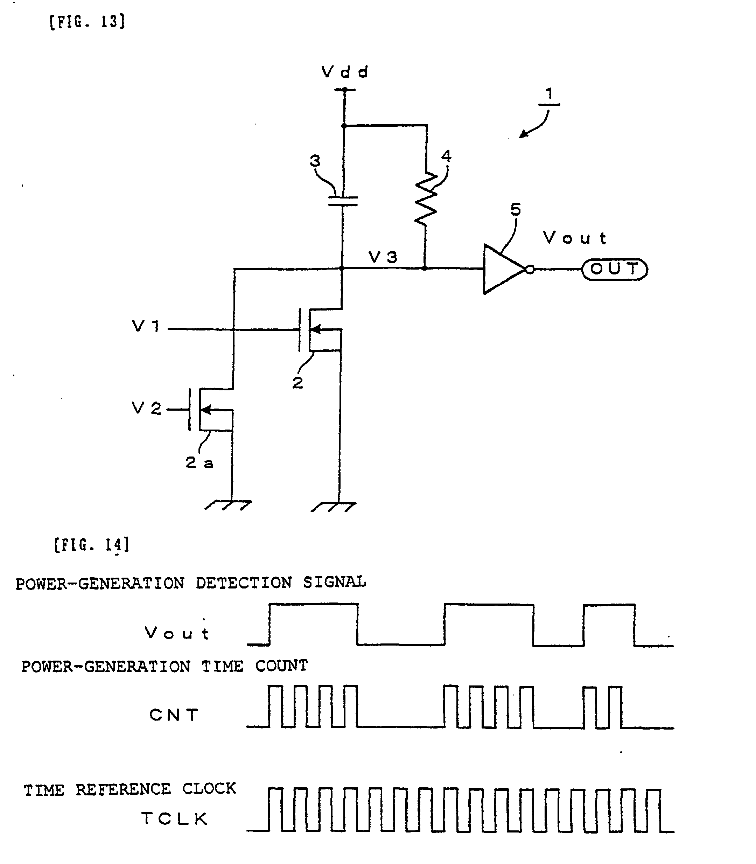

FIG. 11 is a circuit diagram showing the basic arrangement of the power supply block shown in FIG. 2. V1 and V2 are output from an electromagnetic generator 6, V1 and V2 have AC waveforms which are reversed with respect to each other on the pre-stage of a rectification diode bridge 12 as shown in FIG. 12. Therefore, an arrangement in which a power-generation detection circuit 1, as shown in FIG. 13, is switched by using the V1 and V2 to charge the capacitor 3 is considered. The same reference numerals as in FIG. 2 denote the same parts in FIG. 11, and a detailed description thereof will be omitted.

V1 output from the electromagnetic generator 6 is supplied to the gate of the MOS transistor 2, and V2 output from the electromagnetic generator 6 is supplied to the gate of a MOS transistor 2a. As is apparent from FIG. 13, when the MOS transistor 2 and the MOS transistor 2a are alternately turned on/off, the number of times of switching is twice the number of times of switching in, e.g., the arrangement shown in FIG. 2. As a result, the charging time of the capacitor 3 becomes short, and the potential of V3 can more rapidly reach Vss if power generation continues. Therefore, the rise time of the power-generation detection signal Vout can be shortened.

Although Embodiment 9 described above is applied to the arrangement of Embodiment 1, Embodiment 9 may be applied to not only the arrangement of Embodiment 1, but also the arrangement of Embodiment 2 to Embodiment 8 as a matter of course.

In each of Embodiments 1 to 10, as the power-generation device 6, an electromagnetic power-generation device is used which transmits rotating motion of the rotating weight 7 to the rotor 10 and rotates the rotor 10 to cause the output coil to generate electromotive force. However, the power-generation device 6 is not limited to the above power-generation device, and power-generation devices having the following arrangements may be used. That is, rotating motion is generated by recovery force of a spring to generate electromotive force by the rotating motion, and vibration or displacement externally generated or generated by itself is applied to a piezoelectric member to generate electric power by a piezoelectric effect.

As the electronic device to which the power-generation detection circuit 1 is applied, not only a wrist watch but also a pocket watch or a table timepiece may be used. In addition, the power-generation detection circuit 1 can also be applied to an electronic device such as a pocket calculator, a portable telephone, a portable personal computer, an electronic organiser, or a portable radio. The power-generation detection circuit 1 may be used to recognise a charge amount of a large-capacity capacitor and provide control for preventing an over-voltage from being applied in a power-generation state.

As an application of the power-generation detection circuit 1 described above, as shown in FIG. 14, the output holding time (time in a HI state) of the power-generation detection signal Vout is counted, and the difference between the count value CNT and a time reference timepiece TCLK is always counted by an up-down counter or the like, so that a charge amount can be recognised in real time. When the charge amount is recognised, the charge amount can be notified (shown) to a user.

When a circuit such as a constant-current generation circuit which is driven by sampling to perform a low-power operation is used, this circuit is disadvantageously weak in a variation in power supply voltage (Vss). In a period in which the power-generation detection signal Vout from the power-generation detection circuit 1 described above is set in a HI state (power-generation detection state), a sampling duty of a circuit such as a constant-current generation circuit which is driven by sampling is increased, or the constant-current generation circuit is always driven, so that an erroneous operation or characteristic degradation caused by the variation in power supply voltage of the circuit can be prevented.

The large-capacity capacitor 13 shown in FIG. 1 has the following drawbacks. That is, because of the internal resistance of the large-capacity capacitor 13, voltages at both the ends of the large-capacity capacitor 13 are higher in a power-generation state then in a stationary state, and overcharging occurs. Therefore, in a state wherein the voltage of the large-capacity capacitor 13 is equal to or higher than a predetermined voltage, when power generation is detected by the power-generation detection circuit 1 (the power-generation detection signal Vout is set in a HI state), the limiter circuit is operated, so that the large-capacity capacitor 13 can be prevented from being overcharged.

### [Advantages]

Since the present invention is arranged as described above, the present invention has following advantages.

When charging/discharging of a capacitor is controlled by a simple arrangement constituted by a MOS transistor, a capacitor, and an inverter circuit to detect the voltage of the capacitor, the power-generation state of a power-generation device can be detected. By using a leakage current of a pull-up resistor, a state wherein power generation is stopped can also be detected. Detection time of the power-generation detection signal Vout can be arbitrarily adjusted by connecting a current-limiting resistor in series with the capacitor or changing the capacitance of the capacitor.

When a constant-current circuit is used in place of a resistor, a small leakage current of the capacitor can be set without variation, and power-generation detection at a high precision can be performed.

When the voltage detection means is constituted by a Schmidt trigger inverter circuit, its hysteresis characteristics make it possible to perform stable power-generation detection without being influenced by a variation in voltage of the capacitor.

In addition, when the voltage detection means is constituted by a comparator circuit, an arbitrary threshold value can be set, and stable power-generation detection can be performed without being influenced by a variation in power supply voltage.

Furthermore, when the output holding time of the power-generation detection signal Vout is considered, the strength of power generation can be known according to the output holding time of the power-generation detection signal Vout.

## Claims

1. A power generation detection circuit (1) for detecting power generation from an AC power generation device (6) comprising:
switching means (2) for performing a switching operation depending on a cycle of an AC power signal from the AC power generation device (6);
a capacity element (3) for storing charges in response to said switching operation performed by said switching means (2);
discharging means (4), inserted in a discharging path of said capacity element, for discharging the charges stored in said capacity element (3); and **characterised by**
voltage detection means (5), connected to the capacity element (3) and the discharging path, for detecting that a voltage of the charges stored in said capacity element (3) exceeds a predetermined value and for providing an output signal depending on the detected voltage for indicating power generation by the AC power generation device (6).

2. A power generation detection circuit according to claim 1, **characterised in that** said discharging means is a resistor element (4).

3. A power generation detection circuit according to claim 1, **characterised in that** said discharging means is constituted by a constant-current circuit.

4. A power generation detection circuit according to claim 3, **characterised in that** said constant-current circuit is constituted by a constant-current source (17) and a current mirror circuit (18, 19).

5. A power generation detection circuit according to any one of claims 1 to 4, **characterised by** comprising a current-limiting means (15), connected in series with said capacity element (3), for limiting a charge current of said capacity element (3).

6. A power generation detection circuit according to any one of the preceding claims, **characterised in that** said voltage detection means is an inverter circuit (5).

7. A power generation detection circuit according to any one of claims 1 to 5, **characterised in that** said voltage detection means (5) is a Schmidt trigger inverter circuit (20).

8. A power generation detection circuit according to any one of claims 1 to 5, **characterised in that** said voltage detection circuit (5) is a comparator circuit (21).

9. A power generation detection circuit according to any one of the preceding claims, **characterised in that** said switching means (2) is a transistor.

10. A power generation detection circuit according to claim 9, **characterised in that** said transistor is a MOS transistor (2).

11. A power generation detection circuit according to claim 9, **characterised in that** said transistor is a bipolar transistor.

12. A semiconductor device **characterised by** a power generation detection circuit according to any one of claims 1 to 11.

13. An electronic device **characterised by** comprising:
the AC power generation device (6) for generating the AC power signal; and
a power generation detection circuit according to any one of claims 1 to 11.

14. An electronic device according to claim 13, **characterised in that** said power generation device (6) has a rotating weight (7) for performing swing motion and a powergeneration element (11) for generating electromotive force by rotating motion performed by said rotating weight.

15. An electronic device according to claim 13, **characterised in that** said power generation device (6) has an elastic member on which a deformation force acts, rotating means for performing rotating motion by recovery force generated by causing said elastic member to return to an original shape, and a power generation element (11) for generating electromotive force by the rotating motion of said rotating means.

16. An electronic device according to claim 13, **characterised in that** said power generation device (6) has a piezoelectric element which generates electromotive force by a piezoelectric effect when displacement acts on said piezoelectric element.

17. An electronic device according to any one of claims 13 to 16 **characterised by** a control circuit (30) for controlling power consumed from said device on the basis of a detection result of said voltage detection means (5).

18. An electronic device according to claim 17, **characterised in that** said control circuit (30) is arranged for determining that said power generation device (6) is not performing power generation when a voltage of said capacity element (3) is not more than the predetermined value, and reduces the power consumed from said device.

19. An electronic device according to claim 17 or 18, **characterised in that** said control circuit (30) is arranged for determining that said power generation device (6) is performing power generation when a voltage of said capacity element (3) exceeds the predetermined value, and cancels the reduction in power consumption.

20. An electronic device according to any one of claims 17 to 19, **characterised in that** said control circuit (30) controls the power consumed from said power generation device (6) in consideration of the length of time in which a voltage of said capacity element (3) exceeds the predetermined value.

21. A timepiece **characterised by** an electronic device according to any one of claims 13 to 20 and
a timer circuit for counting time.

22. A timepiece according to claim 21, **characterised in that** said power generation device (6), said power generation detection circuit (1), and said timer circuit are accommodated in a housing of a wrist watch.

23. A timepiece according to claim 21, **characterised in that** said power generation device (6), said power generation detection circuit (1), and said timer circuit are accommodated in a housing of a pocket watch.

24. A timepiece according to claim 21, **characterised in that** said power generation device (6), said power generation detection circuit (1), and said timer circuit are accommodated in a housing of a table clock.

25. A power generation detection method comprising:
the first step of performing a charging operation to a capacity element (3) by a switching operation depending on a cycle of an AC power signal which is externally generated by an AC power generation device (6); and **characterised by**
the second step of performing a discharging operation of said capacity element (3) when a charging operation is not performed to said capacity element (3);
the third step of determining whether a detected voltage of said capacity element (3) is at least a predetermined voltage; and
the fourth step of determining that power generation is performed when the detected voltage of said capacity element (3) exceeds the predetermined voltage and providing an output signal depending on the detected voltage.

26. A power consumption control method comprising a power consumption detection method according to claim 25; and **characterised by**
the fifth step of reducing power consumption of a circuit unit (14) when no power generation is performed.

27. A power consumption control method according to claim 26, **characterised by** comprising:
the sixth step of determining whether time in which the voltage exceeds the predetermined voltage continues for a predetermined period of time; and
the seventh step of cancelling a reduction in power consumption of said circuit unit (14) when the time continues for the predetermined period of time.

28. A timepiece according to claim 26, **characterised in that** said power-generation device, said power-generation detection circuit, and said timer circuit are accommodated in a housing of a pocket watch.

29. A timepiece according to claim 26, **characterised in that** said power-generation device, said power-generation detection circuit, and said timer circuit are accommodated in a housing of a table clock.

30. A power-generation detection method **characterised by** comprising:
the first step of performing a charging operation to a capacity element by a switching operation depending on a cycle of an AC power with is externally generated;
the second step of performing a discharging operation of said capacity element when a charging operation is not performed to said capacity element;
the third step of determining whether a voltage of said capacity element is a predetermined voltage; and
the fourth step of determining that power generation is performed when the voltage exceeds the predetermined voltage.

31. A power consumption control method **characterised by** comprising:
the first step of performing a charging operation to a capacity element by a switching operation depending on a cycle of an AC power which is externally generated;
the second step of performing a discharging operation of said capacity element when a charging operation is not performed to said capacity element;
the third step of determining whether a voltage of said capacity element is a predetermined voltage;
the fourth step of determining that no power generation is performed when the voltage does not exceed the predetermined voltage; and
the fifth step of reducing power consumption of a circuit unit when no power generation is performed.

32. A power consumption control method according to claim 31, **characterised by** comprising:
the sixth step of determining whether time in which the voltage exceeds the predetermined voltage continues for a predetermined period of time; and
the seventh step of cancelling a reduction in power consumption of said circuit unit when the time continues for the predetermined period of time.

## Patentansprüche

1. Stromerzeugungserfassungsschaltung (1) zum Erfassen der Stromerzeugung von einer Wechselstromerzeugungsvorrichtung (6), umfassend:
ein Schaltmittel (2) zum Durchführen einer Schaltoperation in Abhängigkeit von einem Zyklus eines Wechselstromsignals von der Wechselstromerzeugungsvorrichtung (6);
ein Kapazitätselement (3) zum Speichern von Ladungen in Reaktion auf die Schaltoperation, die vom Schaltmittel (2) durchgeführt wird;
ein Entladungsmittel (4), das in einen Entladungspfad des Kapazitätselements eingesetzt ist, um die im Kapazitätselement (3) gespeicherten Ladungen zu entladen;
**gekennzeichnet durch**
ein Spannungserfassungsmittel (5), das mit dem Kapazitätselement (3) und dem Entladungspfad verbunden ist, um zu erfassen, daß eine Spannung der im Kapazitätselement (3) gespeicherten Ladungen eine vorgegebene Spannung überschreitet, und um ein Ausgangssignal in Abhängigkeit von der erfaßten Spannung zu erzeugen, um eine Stromerzeugung **durch** die Wechselstromerzeugungsvorrichtung (6) anzuzeigen.

2. Stromerzeugungserfassungsschaltung nach Anspruch 1, **dadurch gekennzeichnet, daß** das Entladungsmittel ein Widerstandselement (4) ist.

3. Stromerzeugungserfassungsschaltung nach Anspruch 1, **dadurch gekennzeichnet, daß** das Entladungsmittel von einer Konstantstromschaltung gebildet wird.

4. Stromerzeugungserfassungsschaltung nach Anspruch 3, **dadurch gekennzeichnet, daß** die Konstantstromschaltung eine Konstantstromquelle (17) und eine Stromspiegelschaltung (18, 19) umfaßt.

5. Stromerzeugungserfassungsschaltung nach irgendeinem der Ansprüche 1 bis 4, **dadurch gekennzeichnet, daß** sie ein Strombegrenzungsmittel (15) umfaßt, das in Serie mit dem Kapazitätselement (3) verbunden ist, um einen Ladestrom des Kapazitätselements (3) zu begrenzen.

6. Stromerzeugungserfassungsschaltung nach irgendeinem der vorangehenden Ansprüche, **dadurch gekennzeichnet, daß** das Spannungserfassungsmittel eine Inverterschaltung (5) ist.

7. Stromerzeugungserfassungsschaltung nach irgendeinem der Ansprüche 1 bis 5, **dadurch gekennzeichnet, daß** das Spannungserfassungsmittel (5) eine Schmitt-Trigger-Inverterschaltung (20) ist.

8. Stromerzeugungserfassungsschaltung nach irgendeinem der Ansprüche 1 bis 5, **dadurch gekennzeichnet, daß** die Spannungserfassungsschaltung (5) eine Komparatorschaltung (21) ist.

9. Stromerzeugungserfassungsschaltung nach irgendeinem der vorangehenden Ansprüche, **dadurch gekennzeichnet, daß** das Schaltmittel (2) ein Transistor ist.

10. Stromerzeugungserfassungsschaltung nach Anspruch 9, **dadurch gekennzeichnet, daß** der Transistor ein MOS-Transistor (2) ist.

11. Stromerzeugungserfassungsschaltung nach Anspruch 9, **dadurch gekennzeichnet, daß** der Transistor ein Bipolar-Transistor ist.

12. Halbleitervorrichtung, **gekennzeichnet durch** eine Stromerzeugungserfassungsschaltung nach irgendeinem der Ansprüche 1 bis 11.

13. Elektronische Vorrichtung, **dadurch gekennzeichnet, daß** sie umfaßt:
eine Wechselstromerzeugungsvorrichtung (6) zum Erzeugen eines Wechselstromsignals; und
eine Stromerzeugungserfassungsschaltung nach irgendeinem der Ansprüche 1 bis 11.

14. Elektronische Vorrichtung nach Anspruch 13, **dadurch gekennzeichnet, daß** die Stromerzeugungsvorrichtung (6) ein rotierendes Gewicht (7), um eine Schwingbewegung durchzuführen, und ein Stromerzeugungselement (11) aufweist zum Erzeugen einer elektromotorischen Kraft durch die rotierende Bewegung, die vom rotierenden Gewicht ausgeführt wird.

15. Elektronische Vorrichtung nach Anspruch 13, **dadurch gekennzeichnet, daß** die Stromerzeugungsvorrichtung (6) ein elastisches Element, auf das eine Verformungskraft wirkt, ein rotierendes Mittel zum Ausführen einer rotierenden Bewegung durch die erzeugte Rückgewinnungskraft, indem das elastische Element veranlaßt wird, in eine ursprüngliche Form zurückzukehren, und ein Stromerzeugungselement (11) aufweist zum Erzeugen einer elektromotorischen Kraft durch die rotierende Bewegung des rotierenden Mittels.

16. Elektronische Vorrichtung nach Anspruch 13, **dadurch gekennzeichnet, daß** die Stromerzeugungsvorrichtung (6) ein piezoelektrisches Element aufweist, das eine elektromotorische Kraft erzeugt durch einen piezoelektrischen Effekt, wenn eine Verschiebung auf das piezoelektrische Element einwirkt.

17. Elektronische Vorrichtung nach irgendeinem der Ansprüche 13 bis 16, **gekennzeichnet durch** eine Kontrollschaltung (30) zum Kontrollieren des von der Vorrichtung verbrauchten Stroms auf der Grundlage eines Erfassungsergebnisses des Spannungserfassungsmittels (5).

18. Elektronische Vorrichtung nach Anspruch 17, **dadurch gekennzeichnet, daß** die Kontrollschaltung (30) dafür ausgelegt ist, festzustellen, daß die Stromerzeugungsvorrichtung (6) keine Stromerzeugung durchführt, wenn eine Spannung des Kapazitätselements (3) nicht größer ist als ein vorgegebener Wert, und den von der Vorrichtung verbrauchten Strom reduziert.

19. Elektronische Vorrichtung nach Anspruch 17 oder 18, **dadurch gekennzeichnet, daß** die Steuerschaltung (30) dafür ausgelegt ist, festzustellen, daß die Stromerzeugungsvorrichtung (6) eine Stromerzeugung ausführt, wenn eine Spannung des Kapazitätselements (3) den vorgegebenen Wert überschreitet, und die Reduktion des Stromverbrauchs aufhebt.

20. Elektronische Vorrichtung nach irgendeinem der Ansprüche 17 bis 19, **dadurch gekennzeichnet, daß** die Kontrollschaltung (30) den von der Stromerzeugungsvorrichtung (6) verbrauchten Strom kontrolliert unter Berücksichtigung der Zeitdauer, während der eine Spannung des Kapazitätselements (3) den vorgegebenen Wert überschreitet.

21. Uhr, **gekennzeichnet durch** eine elektronische Vorrichtung nach irgendeinem der Ansprüche 13 bis 20, und eine Zeitgeberschaltung zum Zählen der Zeit.

22. Uhr nach Anspruch 21, **dadurch gekennzeichnet, daß** die Stromerzeugungsvorrichtung (6), die Stromerzeugungserfassungsschaltung (1) und die Zeitgeberschaltung in einem Gehäuse einer Armbanduhr enthalten sind.

23. Uhr nach Anspruch 21, **dadurch gekennzeichnet, daß** die Stromerzeugungsvorrichtung (6), die Stromerzeugungserfassungsschaltung (1) und die Zeitgeberschaltung in einem Gehäuse einer Taschenuhr enthalten sind.

24. Uhr nach Anspruch 21, **dadurch gekennzeichnet, daß** die Stromerzeugungsvorrichtung (6), die Stromerzeugungserfassungsschaltung (1) und die Zeitgeberschaltung in einem Gehäuse einer Tischuhr enthalten sind.

25. Stromerzeugungserfassungsverfahren, umfassend:
einen ersten Schritt des Durchführens einer Ladeoperation eines Kapazitätselements (3) mittels einer Schaltoperation in Abhängigkeit von einem Zyklus eines Wechselstromsignals, das extern von einer Wechselstromerzeugungsvorrichtung (6) erzeugt wird;
**gekennzeichnet durch**
den zweiten Schritt des Durchführens einer Entladeoperation des Kapazitätselements (3), wenn eine Ladeoperation des Kapazitätselements (3) nicht durchgeführt wird;
den dritten Schritt des Ermittelns, ob eine erfaßte Spannung des Kapazitätselements (3) wenigstens gleich einer vorgegebenen Spannung ist; und
den vierten Schritt des Ermittelns, daß die Stromerzeugung durchgeführt wird, wenn die erfaßte Spannung des Kapazitätselements (3) die vorgegebene Spannung überschreitet, und des Bereitstellens eines Ausgangssignals in Abhängigkeit von der erfaßten Spannung.

26. Stromverbrauchkontrollverfahren, das ein Stromverbraucherfassungsverfahren nach Anspruch (25) umfaßt;
**gekennzeichnet durch**
den fünften Schritt des Reduzierens des Stromverbrauchs einer Schaltungseinheit (14), wenn keine Stromerzeugung durchgeführt wird.

27. Stromverbrauchkontrollverfahren nach Anspruch 26,
**dadurch gekennzeichnet, daß** es umfaßt:
den sechsten Schritt des Ermittelns, ob die Zeit, in der die Spannung die vorgegebene Spannung überschreitet, für eine vorgegebene Zeitperiode andauert; und
den siebten Schritt des Aufhebens einer Reduktion des Stromverbrauchs der Schaltungseinheit (14), wenn die Zeit für die vorgegebene Zeitperiode andauert.

28. Uhr nach Anspruch 26, **dadurch gekennzeichnet, daß** die Stromerzeugungsvorrichtung, die Stromerzeugungserfassungsschaltung und die Zeitgeberschaltung in einem Gehäuse einer Taschenuhr enthalten sind.

29. Uhr nach Anspruch 26, **dadurch gekennzeichnet, daß** die Stromerzeugungsvorrichtung, die Stromerzeugungserfassungsschaltung und die Zeitgeberschaltung in einem Gehäuse einer Tischuhr enthalten sind.

30. Stromerzeugungserfassungsverfahren, **gekennzeichnet durch**:
den ersten Schritt des Durchführens einer Ladeoperation eines Kapazitätselements **durch** die Umschaltoperation in Abhängigkeit von einem Zyklus eines Wechselstromsignals, das extern erzeugt wird;
den zweiten Schritt des Durchführens einer Entladeoperation des Kapazitätselements, wenn eine Ladeoperation des Kapazitätselements nicht durchgeführt wird;
den dritten Schritt des Ermittelns, ob eine Spannung des Kapazitätselements gleich einer vorgegebenen Spannung ist; und
den vierten Schritt des Ermittelns, das die Stromerzeugung durchgeführt wird, wenn die Spannung die vorgegebene Spannung überschreitet.

31. Stromverbrauchkontrollverfahren, **gekennzeichnet durch**:
den ersten Schritt des Durchführens einer Ladeoperation eines Kapazitätselements **durch** die Umschaltoperation in Abhängigkeit von einem Zyklus eines Wechselstromsignals, das extern erzeugt wird;
den zweiten Schritt des Durchführens einer Entladeoperation des Kapazitätselements, wenn eine Ladeoperation des Kapazitätselements nicht durchgeführt wird;
den dritten Schritt des Ermittelns, ob eine Spannung des Kapazitätselements gleich einer vorgegebenen Spannung ist;
den vierten Schritt des Ermittelns, daß keine Stromerzeugung durchgeführt wird, wenn die Spannung nicht die vorgegebene Spannung überschreitet; und
den fünften Schritt des Reduzierens des Stromverbrauchs einer Schaltungseinheit, wenn keine Stromerzeugung durchgeführt wird.

32. Stromverbrauchkontrollverfahren nach Anspruch 31, **gekennzeichnet durch**:
den sechsten Schritt des Ermittelns, ob die Zeit, in der die Spannung die vorgegebene Spannung überschreitet, für eine vorgegebene Zeitperiode andauert; und
den siebten Schritt des Aufhebens einer Reduktion des Stromverbrauchs der Schaltungseinheit, wenn die Zeit für die vorgegebene Zeitperiode andauert.

## Revendications

1. Circuit de détection de production d'énergie (1) pour détecter la production d'énergie d'un dispositif de production d'énergie en courant alternatif (6) comprenant :
un moyen de commutation (2) pour effectuer une opération de commutation en fonction d'un cycle d'un signal d'énergie en courant alternatif en provenance du dispositif de production d'énergie en courant alternatif (6) ;
un élément formant capacité (3) pour stocker des charges en réponse à ladite opération de commutation effectuée par ledit moyen de commutation (2) ;
un moyen de décharge (4), inséré dans un chemin de décharge dudit élément formant capacité, pour décharger les charges stockées dans ledit élément formant capacité (3) ; et **caractérisé par** :
un moyen de détection de tension (5), relié à l'élément formant capacité (3) et au chemin de décharge, pour détecter qu'une tension des charges stockées dans ledit élément formant capacité (3) dépasse une valeur prédéterminée et pour donner un signal de sortie en fonction de la tension détectée pour indiquer une production d'énergie par le dispositif de production d'énergie en courant alternatif (6).

2. Circuit de détection de production d'énergie selon la revendication 1, **caractérisé en ce que** ledit moyen de décharge est un élément formant résistance (4).

3. Circuit de détection de production d'énergie selon la revendication 1, **caractérisé en ce que** ledit moyen de décharge est constitué par un circuit à courant constant.

4. Circuit de détection de production d'énergie selon la revendication 3, **caractérisé en ce que** ledit circuit à courant constant est constitué par une source à courant constant (17) et par un circuit à miroir de courant (18, 19).

5. Circuit de détection de production d'énergie selon l'une quelconque des revendications 1 à 4, **caractérisé en ce qu'**il comprend un moyen limiteur de courant (15), relié en série avec ledit élément formant capacité (3), pour limiter un courant de charge dudit élément formant capacité (3).

6. Circuit de détection de production d'énergie selon l'une quelconque des revendications précédentes, **caractérisé en ce que** ledit moyen de détection de tension est un circuit inverseur (5).

7. Circuit de détection de production d'énergie selon l'une quelconque des revendications 1 à 5, **caractérisé en ce que** ledit moyen de détection de tension (5) est un circuit inverseur à bascule de Schmidt (20).

8. Circuit de détection de production d'énergie selon l'une quelconque des revendications 1 à 5, **caractérisé en ce que** ledit circuit de détection de tension (5) est un circuit comparateur (21).

9. Circuit de détection de production d'énergie selon l'une quelconque des revendications précédentes, **caractérisé en ce que** ledit moyen de commutation (2) est un transistor.

10. Circuit de détection de production d'énergie selon la revendication 9, **caractérisé en ce que** ledit transistor est un transistor MOS (2).

11. Circuit de détection de production d'énergie selon la revendication 9, **caractérisé en ce que** ledit transistor est un transistor bipolaire.

12. Dispositif à semiconducteur **caractérisé par** un circuit de détection de production d'énergie selon l'une quelconque des revendications 1 à 11.

13. Dispositif électronique **caractérisé en ce qu'**il comprend :
le dispositif de production d'énergie en courant alternatif (6) pour produire le signal d'énergie en courant alternatif ; et
un circuit de détection de production d'énergie selon l'une quelconque des revendications 1 à 11.

14. Dispositif électronique selon la revendication 13, **caractérisé en ce que** ledit dispositif de production d'énergie (6) comporte un poids rotatif (7) pour effectuer un mouvement d'oscillation, et un élément de production d'énergie (11) pour produire une force électromotrice par le mouvement rotatif effectué par ledit poids rotatif.

15. Dispositif électronique selon la revendication 13, **caractérisé en ce que** ledit dispositif de production d'énergie (6) comporte un élément élastique sur lequel une force de déformation agit, un moyen de rotation pour effectuer un mouvement rotatif par une force de récupération produite en amenant ledit élément élastique à revenir à une forme d'origine, et un élément de production d'énergie (11) pour produire une force électromotrice selon le mouvement rotatif dudit moyen de rotation.

16. Dispositif électronique selon la revendication 13, **caractérisé en ce que** ledit dispositif de production d'énergie (6) comporte un élément piézo-électrique qui produit une force électromotrice par un effet piézo-électrique quand un déplacement agit sur ledit élément piézo-électrique.

17. Dispositif électronique selon l'une quelconque des revendications 13 à 16, **caractérisé par** un circuit de commande (30) pour commander l'énergie consommée à partir dudit dispositif sur la base d'un résultat de détection dudit moyen de détection de tension (5).

18. Dispositif électronique selon la revendication 17, **caractérisé en ce que** ledit circuit de commande (30) est conçu pour déterminer que ledit dispositif de production d'énergie (6) n'effectue pas de production d'énergie quand une tension dudit élément formant capacité (3) n'est pas supérieure à la valeur prédéterminée, et réduit l'énergie consommée à partir dudit dispositif.

19. Dispositif électronique selon la revendication 17 ou 18, **caractérisé en ce que** ledit circuit de commande (30) est conçu pour déterminer que ledit dispositif de production d'énergie (6) effectue une production d'énergie quand une tension dudit élément formant capacité (3) dépasse la valeur prédéterminée, et annule la réduction de la consommation d'énergie.

20. Dispositif électronique selon l'une quelconque des revendications 17 à 19, **caractérisé en ce que** ledit circuit de commande (30) commande l'énergie consommée à partir dudit dispositif de production d'énergie (6) en considérant la durée pendant laquelle une tension dudit élément formant capacité (3) dépasse la valeur prédéterminée.

21. Appareil d'horlogerie **caractérisé par** un dispositif électronique selon l'une quelconque des revendications 13 à 20 et par un circuit de minuterie pour compter le temps.

22. Appareil d'horlogerie selon la revendication 21, **caractérisé en ce que** ledit dispositif de production d'énergie (6), ledit circuit de détection de production d'énergie (1), et ledit circuit de minuterie sont logés dans un boîtier de montre-bracelet.

23. Appareil d'horlogerie selon la revendication 21, **caractérisé en ce que** ledit dispositif de production d'énergie (6), ledit circuit de détection de production d'énergie (1), et ledit circuit de minuterie sont logés dans un boîtier d'une montre de poche.

24. Appareil d'horlogerie selon la revendication 21, **caractérisé en ce que** ledit dispositif de production d'énergie (6), ledit circuit de détection de production d'énergie (1), et ledit circuit de minuterie sont logés dans un boîtier d'une pendule.

25. Procédé de détection de production d'énergie comprenant :
une première étape consistant à effectuer une opération de charge d'un élément formant capacité (3) par une opération de commutation en fonction d'un cycle d'un signal d'énergie en courant alternatif qui est produit de manière externe par un dispositif de production d'énergie en courant alternatif (6) ; et **caractérisé par** :
une deuxième étape consistant à effectuer une opération de décharge dudit élément formant capacité (3) quand une opération de charge n'est pas effectuée sur ledit élément formant capacité (3) ;
une troisième étape consistant à déterminer si une tension détectée dudit élément formant capacité (3) est au moins une tension prédéterminée ; et
une quatrième étape consistant à déterminer qu'une production d'énergie est effectuée quand la tension détectée dudit élément formant capacité (3) dépasse la tension prédéterminée et à donner un signal de sortie en fonction de la tension détectée.

26. Procédé de commande de consommation d'énergie comprenant un procédé de détection de consommation d'énergie selon la revendication 25 ; et **caractérisé par**
une cinquième étape consistant à réduire la consommation d'énergie d'une unité formant circuit (14) quand aucune production d'énergie n'est effectuée.

27. Procédé de commande de consommation d'énergie selon la revendication 26, **caractérisé en ce qu'**il comprend :
une sixième étape consistant à déterminer si la durée pendant laquelle la tension dépasse la tension prédéterminée continue pendant une période de temps prédéterminée ; et
une septième étape consistant à annuler une réduction de consommation d'énergie de ladite unité formant circuit (14) quand la durée continue pendant la période de temps prédéterminée.

28. Appareil d'horlogerie selon la revendication 26, **caractérisé en ce que** ledit dispositif de production d'énergie, ledit circuit de détection de production d'énergie, et ledit circuit de minuterie sont logés dans un boîtier d'une montre de poche.

29. Appareil d'horlogerie selon la revendication 26, **caractérisé en ce que** ledit dispositif de production d'énergie, ledit circuit de détection de production d'énergie, et ledit circuit de minuterie sont logés dans un boîtier de pendule.

30. Procédé de détection de production d'énergie **caractérisé en ce qu'**il comprend :
une première étape consistant à effectuer une opération de charge sur un élément formant capacité par une opération de commutation en fonction d'un cycle d'une énergie en courant alternatif qui est produite de manière externe ;
une deuxième étape consistant à effectuer une opération de décharge dudit élément formant capacité quand une opération de charge n'est pas effectuée sur ledit élément formant capacité ;
une troisième étape consistant à déterminer si une tension dudit élément formant capacité est une tension prédéterminée ; et
une quatrième étape consistant à déterminer que la production d'énergie est effectuée quand la tension dépasse la tension prédéterminée.

31. Procédé de commande de consommation d'énergie **caractérisé en ce qu'**il comprend :
une première étape consistant à effectuer une opération de charge sur un élément formant capacité par une opération de commutation en fonction d'un cycle d'une énergie en courant alternatif qui est produite de manière externe ;
une deuxième étape consistant à effectuer une opération de décharge dudit élément formant capacité quand une opération de charge n'est pas effectuée sur ledit élément formant capacité ;
une troisième étape consistant à déterminer si une tension dudit élément formant capacité est une tension prédéterminée ;
une quatrième étape consistant à déterminer qu'aucune production d'énergie n'est effectuée quand la tension ne dépasse pas la tension prédéterminée ; et
une cinquième étape consistant à réduire la consommation d'énergie d'une unité formant circuit quand aucune production d'énergie n'est effectuée.

32. Procédé de commande de consommation d'énergie selon la revendication 31, **caractérisé en ce qu'**il comprend :
une sixième étape consistant à déterminer si la durée pendant laquelle la tension dépasse la tension prédéterminée continue pendant une période de temps prédéterminée ; et
une septième étape consistant à annuler une réduction de consommation d'énergie de ladite unité formant circuit quand la durée continue pendant la période de temps prédéterminée.
